# FASCICULE DE BREVET EUROPEEN

(11) **EP 2 798 642 B1**
(45) Date de publication et mention de la délivrance du brevet: **27.07.2016**
(21) Numéro de dépôt: 12815707.0
(22) Date de dépôt: 26.12.2012
(51) Int. Cl.: G21D 3/08

(54) **PROCEDE DE PILOTAGE D'UN REACTEUR NUCLEAIRE A EAU PRESSURISEE**
VERFAHREN ZUR STEUERUNG EINES DRUCKWASSER-KERNREAKTORS
METHOD FOR CONTROLLING A PRESSURISED WATER NUCLEAR REACTOR

(30) Priorité: 29.12.2011 FR 1162529
(43) Date de publication de la demande: 05.11.2014
(73) Titulaire: AREVA NP, 92400 Courbevoie (FR)
(72) Inventeur: BARTHELET, Pierre, F-92170 Vanves (FR); GROSSETETE, Alain, F-92000 Nanterre (FR); MARTIN, Jennifer, F-91360 Villemoisson Sur Orge (FR); MOURLEVAT, Jean Lucien, F-78590 Noisy Le Roi (FR)
(74) Mandataire: Lebkiri, Alexandre
(86) Numéro de dépôt international: PCT/EP2012/076894
(87) Numéro de publication internationale: WO 2013/098286

(56) Documents cités:
- FR-A1- 2 583 207

## Description

La présente invention concerne un procédé de pilotage d'un réacteur nucléaire à eau pressurisée permettant de minimiser les volumes d'effluents ainsi que les sollicitations des grappes de contrôle d'un réacteur nucléaire à eau pressurisée.

Le procédé selon l'invention est particulièrement bien adapté au pilotage en réglage de fréquence ou en suivi de charge d'un réacteur nucléaire.

Il peut s'avérer utile, en effet, notamment dans des pays comme la France où 80% de l'électricité est produite par des réacteurs nucléaires, que la puissance globale fournie par les réacteurs varie afin de s'adapter aux besoins du réseau électrique qu'ils alimentent ; on parle alors de suivi de réseau ou de suivi de charge.

Le réglage de fréquence a quant à lui pour objectif d'ajuster en temps réel la production par rapport à la consommation d'énergie électrique dont les variations interviennent avec de faibles amplitudes.

Lors d'un suivi de charge, la puissance produite par le réacteur est régulée de façon à correspondre à un programme préétabli par le service d'exploitation du réseau électrique. Cette prévision est en générale journalière mais elle peut être hebdomadaire avec des ajustements journaliers. Un suivi de charge peut tout autant couvrir une ou plusieurs variations journalières qu'un fonctionnement prolongé à puissance réduite entre la pleine puissance et la puissance nulle.

Ainsi, il est en particulier souhaitable de pouvoir faire fonctionner les réacteurs à puissance réduite pendant une longue période où la demande du réseau est faible, avant de revenir si nécessaire à la puissance nominale PN.

En parallèle à ce programme de suivi de charge est effectué un réglage de fréquence qui permet d'adapter la production du réacteur aux besoins réels du réseau.

L'ajustement de la puissance fournie par le réacteur est réalisé par des moyens de pilotage positionnant dans le coeur les grappes de contrôle constituées d'élément neutrophage à différentes positions d'insertion de façon à absorber plus ou moins les neutrons et ajustant éventuellement la concentration d'un composé absorbant neutronique, tel que le bore, dans le fluide caloporteur primaire, en fonction de la puissance désirée et/ou des mesures issues de l'instrumentation du coeur du réacteur.

Par exemple, les moyens de pilotage sont formés par un ensemble d'équipements électroniques et électriques qui, à partir de mesures issues de chaînes d'instrumentation et en les comparant à des seuils, élaborent des ordres de déplacement de grappes de contrôle et/ou de modification de la concentration en bore dans le fluide caloporteur primaire par injection d'eau (dilution) ou de bore (borication).

Il est connu différents modes de pilotage d'un réacteur nucléaire à eau pressurisée. D'une façon générale, le pilotage consiste à contrôler et à réguler au minimum la température moyenne du fluide caloporteur primaire T_{moy} et la distribution de puissance thermique (et neutronique) et en particulier la distribution axiale de puissance afin d'éviter la formation d'un déséquilibre de puissance entre la zone haute et la zone basse du coeur.

Les méthodes de régulation de ces paramètres varient en fonction des différents modes de pilotage utilisés, à savoir les modes de pilotage communément nommés mode A, mode G, mode X et mode T. D'une façon générale, la température moyenne T_{moy} est régulée par le déplacement des grappes de contrôle en fonction des différents paramètres tels que la puissance demandée à la turbine, la valeur courante de la température du fluide caloporteur, ainsi qu'une température de consigne, et/ou éventuellement par la modification de la concentration en bore dans le fluide caloporteur primaire pour éviter que les grappes de contrôle ne soient trop insérées ce qui pourrait perturber la distribution axiale de puissance.

Le choix du mode de pilotage d'un réacteur nucléaire est déterminé en prenant en considération le fait que l'action des grappes de contrôle a des effets immédiats alors que l'action par injection de bore en solution est comparativement plus lente.

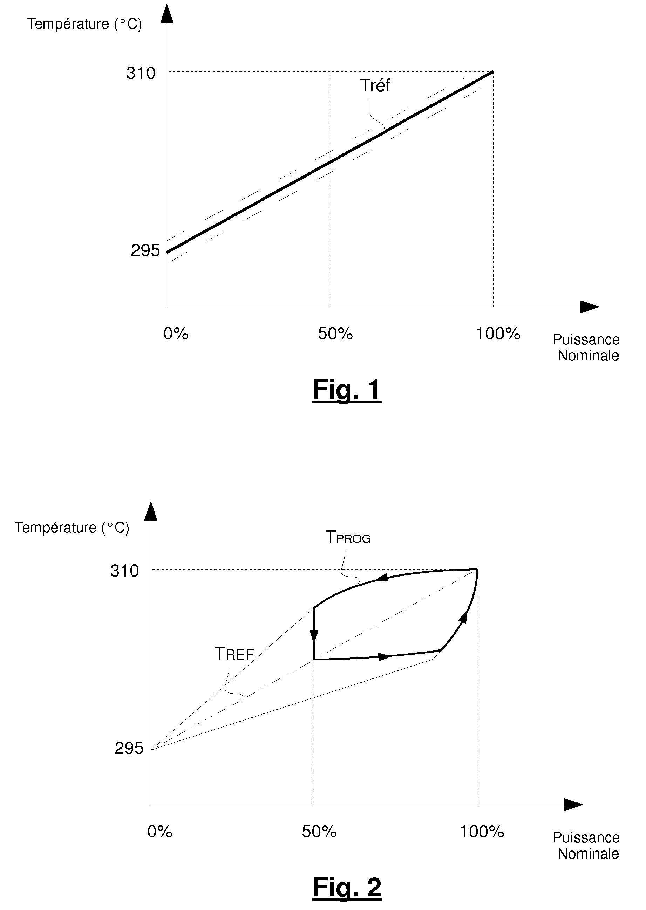

Le mode de pilotage A vise à maintenir la température moyenne du liquide de refroidissement égale à la valeur de la température de référence par déplacement des grappes de contrôle, la température de référence étant programmée en fonction de la charge (figure 1). Lorsque l'opérateur baisse (ou augmente) la charge de la turbine, le système de régulation provoque l'insertion (ou l'extraction) des grappes pour contrôler la température moyenne du liquide de refroidissement de manière à ce qu'elle soit égale à la température de référence Tréf à une incertitude près qui est définie par une bande morte d'amplitude constante d'environ 0,5 à 1°C autour de la valeur de la température de référence (représentée par des pointillés sur la figure 1). En se déplaçant, les grappes de contrôle perturbent la distribution de puissance, en particulier la distribution axiale. Lorsque la limite du déséquilibre axial est atteinte, la baisse (ou l'augmentation) de charge est accompagnée par une borication (ou dilution) du liquide de refroidissement du circuit primaire, de telle sorte que les grappes de contrôle ne continuent pas à s'insérer (s'extraire) au-delà de la position d'insertion limite correspondant à la limite souhaitée du déséquilibre axial. Si une demande de retour rapide en puissance survient lors d'un palier bas en suivi de charge, les grappes de contrôle risquent de se retrouver rapidement en butée haute sans qu'une action sur la dilution puisse intervenir assez rapidement pour l'éviter. Dans ce cas, il est nécessaire de ralentir l'augmentation de charge de manière à la rendre compatible avec l'inertie des effets de dilution/borication sous peine de provoquer des refroidissements notables qui seraient néfastes à la tenue des équipements mécaniques. Le mode A n'est donc pas un mode particulièrement adapté pour faire du suivi de charge ou du réglage en fréquence.

Afin de remédier à cet inconvénient, il a été développé un procédé de contrôle de la température du fluide de refroidissement d'un réacteur à eau sous pression conventionnel (i.e. d'un réacteur piloté en mode A) permettant d'améliorer la capacité de suivi de charge du réacteur. Un tel procédé est décrit dans le document FR2583207.

Pour cela, le procédé défini une température de référence T_{PROG} (figure 2) lors des variations de charge qui est différente de la température de référence T_{REF} lors d'un fonctionnement en régime stable. La température de référence lors d'une variation de charge, dite température de référence programmée (T_{PROG}), cherche à suivre une consigne permettant, de plus, de minimiser les variations de concentration en bore du liquide de refroidissement. Cette température de référence programmée est limitée par une limite supérieure et par une limite inférieure, ces limites délimitant une région dans laquelle il est possible de programmer le profil d'évolution de la température de référence programmée lors d'un suivi de charge. La figure 2 illustre un profil d'évolution programmée de la température de référence lors d'un suivi de charge pour passer de 100% de la puissance nominale à 50% de la puissance nominale suivi d'un retour à 100% de la puissance nominale. La programmation d'un tel profil d'évolution de la température de référence a pour avantage secondaire de réduire, dans certains cas de fonctionnement comme le réglage de fréquence, le nombre de pas des mécanismes de commande des grappes. Toutefois, cette réduction du nombre de pas n'est pas réellement significative et ne permet pas d'augmenter sensiblement la durée de vie de ces mécanismes de commande.

Malgré l'utilisation de ce procédé de pilotage permettant d'améliorer la capacité de suivi de charge d'un réacteur piloté en mode A, les variations de puissances rapides ou de grandes amplitudes restent problématiques notamment à cause de la vitesse d'action limitée des opérations de borication ou de dilution.

Il existe d'autres modes de pilotage connus qui sont plus adaptés pour réaliser du suivi de charge, il s'agit notamment des modes G, X et T.

Le mode G prend en compte lors de la détermination de la position d'insertion des barres de contrôle l'éventualité d'un retour rapide à 100% de la puissance nominale par le retrait des barres de contrôle. Pour cela, le mode de pilotage G pilote deux types de groupes de barres de contrôle ayant des absorptivités neutroniques différentes. Un des groupes a sa position d'insertion qui est fonction du niveau de puissance et garantit la possibilité d'un retour rapide à la puissance nominale PN. On entend par le terme « rapide » une reprise de charge suffisamment rapide pour que la variation de la concentration de xénon soit faible, c'est-à-dire une reprise de charge ayant une vitesse de progression typiquement comprise entre 3% et 5% PN/min. L'autre groupe de barres de contrôle, plus lourd, est dédié au contrôle de température moyenne T_{moy} du réacteur, et indirectement par des opérations de dilution et de borication au contrôle de la distribution axiale de puissance.

Les modes de pilotage X et T sont des modes de pilotages avancés prenant en compte dans le positionnement des grappes de contrôle, la capacité de remontée en puissance Pₘₐₓ choisie préalablement par un opérateur entre la puissance courante et 100% de puissance nominale. On entend par capacité de remontée en puissance Pₘₐₓ, la possibilité de remonter rapidement en puissance, c'est-à-dire avec une vitesse de progression comprise typiquement entre 2% et 5% PN/min, d'une puissance réduite à une puissance élevée (consigne Pmax) définie préalablement par l'opérateur lors de la programmation du suivi de charge.

Contrairement au mode A, les modes de pilotage G, X et T sont des modes qui sont adaptés au fonctionnement en suivi de charge ou en réglage en fréquence des réacteurs à eau pressurisée. Toutefois, la régulation de la température sollicite tout de même les barres de contrôle de façon importante et le traitement des effluents a un coût important pour l'exploitant et oblige à réaliser des rejets dont le volume autorisé devient de plus en plus restrictif (impact environnemental).

Or le nombre de pas que peuvent réaliser les mécanismes de commande des grappes de contrôle est limité. Cette limite pourrait être atteinte avant les 60 ans de durée de vie du réacteur en cas de manoeuvrabilité importante. Les mécanismes de commande devraient alors être remplacés, ce qui nécessiterait une opération de maintenance coûteuse et complexe.

Dans ce contexte, l'invention vise à résoudre les problèmes mentionnés ci-dessus en proposant un procédé de pilotage d'un réacteur nucléaire permettant d'optimiser les déplacements des barres de contrôles lors des variations de puissance du réacteur en suivi de charge ou en réglage de fréquence ainsi que les volumes d'effluents provoqués par les opérations de dilution/borication du fluide caloporteur primaire lors des variations de puissance du réacteur en suivi de charge, quel que soit le mode de pilotage du réacteur nucléaire.

A cette fin, l'invention propose un procédé de pilotage d'un réacteur nucléaire à eau sous pression, ledit réacteur comportant :
- un coeur produisant une puissance thermique ;
- des moyens pour acquérir des grandeurs représentatives des conditions de fonctionnement du coeur (puissance thermique, température du liquide primaire de refroidissement) ;
ledit procédé comportant une étape de régulation de la température du liquide primaire de refroidissement si la température de liquide primaire de refroidissement, pour une puissance thermique donnée, n'est pas comprise dans un intervalle de température consigne prédéfini en fonction de la puissance du réacteur, ledit intervalle de température consigne étant défini par :
- une amplitude variable sur une plage de puissance thermique comprise entre N% et 100% de la puissance nominale, N étant compris dans l'intervalle [0 ; 100[;
- une amplitude nulle à 100% de la puissance nominale ;
- une amplitude nulle à N% de la puissance nominale ;
ladite régulation n'intervenant pas tant que la température du liquide primaire est à l'intérieur dudit intervalle de température pour une puissance thermique donnée.

On entend par « amplitude variable » une amplitude qui évolue en fonction de la puissance thermique, c'est-à-dire avec une évolution (augmentation ou réduction) de l'amplitude en fonction de la puissance thermique, à l'inverse d'une amplitude constante sur une plage de puissance thermique.

L'amplitude nulle correspond à une unique valeur de température consigne (valeur ponctuelle).

Ainsi, grâce à l'invention, la température de consigne n'est pas définie exclusivement par une valeur de température associé à une puissance thermique mais par un « domaine de température consigne », délimité par une limite haute et une limite basse , dans lequel la température du liquide primaire peut fluctuer librement lors d'un suivi de charge ou lors d'un réglage en fréquence sans déclenchement d'une quelconque régulation de la température du liquide primaire se traduisant par un déplacement des barres de contrôle et/ou par une modification de la concentration en bore.

La définition d'un intervalle de température consigne pour une puissance thermique donnée permet ainsi d'utiliser avantageusement les effets de la réactivité liés aux variations de la température du liquide primaire dans l'intervalle de température consigne, pour minimiser les actions de contrôle de la réactivité du réacteur. Ainsi, la variation libre de la température du liquide primaire dans l'intervalle de température permet de diminuer les actions des actionneurs (diminution voire suppression des pas des mécanismes de commandes des grappes) ainsi que les volumes d'effluents.

Avantageusement, l'intervalle de température consigne présente une amplitude de température maximale pour une puissance thermique, ou une plage de puissances thermiques, sur laquelle on souhaite effectuer un réglage de fréquence d'un réacteur nucléaire fonctionnant en suivi de charge.

Ainsi à un niveau de puissance donnée, l'intervalle de température consigne est défini par une limite haute (borne supérieure) et par une limite basse (borne inférieure) de température autorisées, la différence entre la limite haute et la limite basse définissant l'amplitude de l'intervalle de température.

Ainsi, le procédé selon l'invention n'impose pas de suivre un profil linéaire particulier de température consigne de référence lors d'un suivi de charge. En effet, un tel profil de température consigne impose de réguler la température moyenne du liquide de refroidissement par des déplacements des grappes de contrôle et/ou par modification de la concentration en bore, dès que la température moyenne du liquide de refroidissement s'écarte de la température consigne définie par le profil de température.

Ainsi, le domaine de température consigne, ainsi défini par la pluralité d'intervalle de température d'amplitude variable, est à différencier d'une «bande morte » englobant la température de référence (figure 1). Classiquement, une bande morte a une amplitude réduite et une amplitude constante, de l'ordre de 0,5 à 1°C maximum, et est utilisée pour limiter les sollicitations intempestives des grappes de contrôle dans une plage en rapport avec l'incertitude acceptée de la température.

Le procédé de pilotage d'un réacteur nucléaire à eau pressurisée selon l'invention peut également présenter une ou plusieurs des caractéristiques ci-dessous, considérées individuellement ou selon toutes les combinaisons techniquement possibles :
- l'amplitude dudit intervalle est maximale entre 40% et 80% de la puissance nominale ;
- ledit intervalle de température consigne est inscrit dans une zone dont la limite inférieure correspond à la température consigne à 0% de la puissance nominale et dont la limite supérieure correspond à la température consigne à 100% de la puissance nominale ;

- le procédé comporte une étape de régulation d'au moins un autre des paramètres du coeur parmi : la distribution axiale de puissance et la capacité de retour instantané en puissance lorsque la température du liquide primaire est comprise dans l'intervalle de température consigne ;
- ledit intervalle de température présente une amplitude variable au moins sur une plage de puissance thermique comprise entre 50% et 100% de la puissance nominale.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1, déjà décrite, illustre un profil de la température consigne du liquide primaire en fonction de la puissance thermique d'un réacteur nucléaire à eau pressurisée ;
- la figure 2, déjà décrite, illustre un profil d'évolution programmée de la température de référence lors d'un suivi de charge d'un réacteur nucléaire à eau pressurisée ;
- la figure 3 illustre un premier exemple d'un domaine de température consigne d'amplitude variable en fonction de la puissance thermique selon l'invention ;
- la figure 4 illustre un deuxième exemple d'un domaine de température consigne d'amplitude variable en fonction de la puissance thermique selon l'invention ;
- la figure 5a est un graphique illustrant un exemple de variation de la puissance nominale du réacteur en fonction du temps lors d'un fonctionnement en réglage de fréquence ;
- la figure 5b est un graphique illustrant les variations de température en fonction du temps obtenues par la mise en oeuvre du procédé de pilotage selon l'invention, lors du fonctionnement en réglage de fréquence illustré à la figure 5a, en comparaison avec les variations de température en fonction du temps obtenue par la mise en oeuvre d'un procédé de pilotage selon l'état de la technique ;
- la figure 5c est un graphique illustrant les variations de la position d'un groupe de grappes de contrôle obtenues par la mise en oeuvre du procédé de pilotage selon l'invention, lors du fonctionnement en réglage de fréquence illustré à la figure 5a, en comparaison avec les variations de la position d'un groupe de grappes de contrôle obtenues par la mise en oeuvre d'un procédé de pilotage selon l'état de la technique ;
- la figure 6a est un graphique illustrant un exemple de variation de la puissance nominale du réacteur en fonction du temps lors d'un suivi de charge ;
- la figure 6b est un graphique illustrant la variation de l'effet Xénon lors du suivi de charge illustré à la figure 6a ;
- la figure 6c est un graphique illustrant les variations de température en fonction du temps obtenues par la mise en oeuvre du procédé selon l'invention, lors du fonctionnement en suivi de charge illustré à la figure 6a, en comparaison avec les variations de température en fonction du temps obtenues par la mise en oeuvre d'un procédé de pilotage selon l'état de la technique ;
- la figure 6d est un graphique illustrant les variations de la concentration en bore obtenues par la mise en oeuvre du procédé selon l'invention, lors du fonctionnement en suivi de charge illustré à la figure 6a, en comparaison avec les variations de la concentration en bore obtenues par la mise en oeuvre d'un procédé de pilotage selon l'état de la technique.

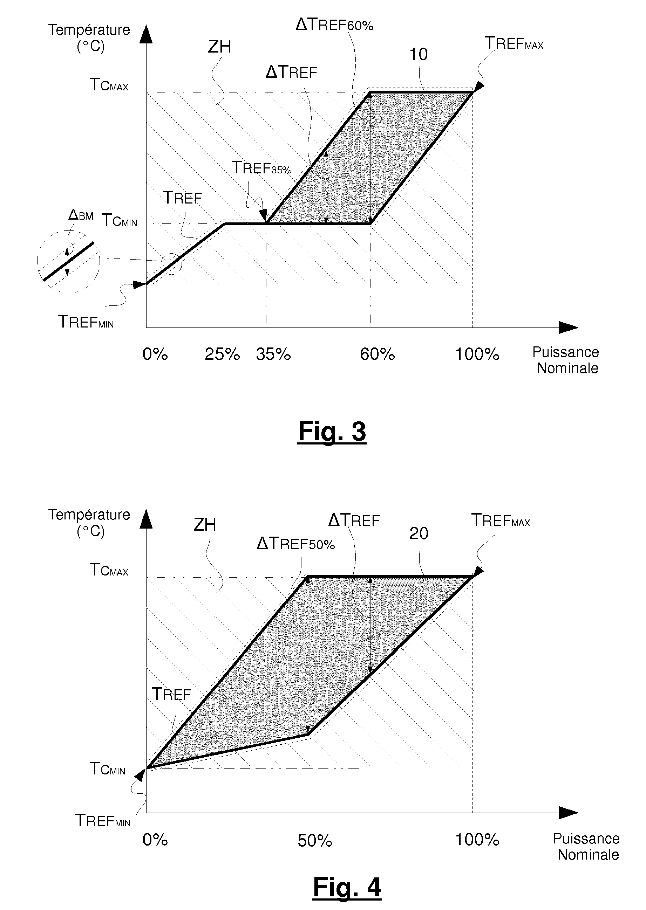

La figure 3 représente un premier exemple de réalisation d'un domaine de température de consigne réalisé sur le programme de température d'un réacteur nucléaire fonctionnant en suivi de charge. On considère que les variations de charge sont réalisées le plus fréquemment entre 50% ou 60% de la puissance nominale (PN) et 100% PN, c'est donc dans cette plage de variations qu'il est nécessaire de réaliser le maximum de gain sur les déplacements des grappes de contrôle.

A 0% PN et à 100% PN, la température consigne est définie par une valeur consigne de température unique (ie par une amplitude de température nulle) et non pas une plage de température consigne. Les valeurs de température consigne TREF_{MIN} à 0% PN et TREF_{MAX} à 100% PN sont classiquement définies de manière à minimiser les éventuels impacts sur les études d'accident et en prenant en compte la capacité de produire une pression de vapeur suffisante pour la turbine. De façon générale, les valeurs de température consignes TREF_{MIN} à 0% PN et TREF_{MAX} à 100% PN selon l'invention sont identiques aux valeurs de température consignes de l'état de la technique pour ces mêmes valeurs de puissance thermique.

De 0% à 35% PN, la consigne de température est réalisée classiquement par une température consigne variant linéairement en fonction de la puissance du réacteur, une unique valeur de température consigne étant associée à une puissance thermique donnée du réacteur.

Entre 35% et 100% de la puissance nominale (PN), la température consigne est définie par un domaine de température 10 formé par une pluralité d'intervalles de température consigne ΔTREF d'amplitudes variables en fonction de la puissance thermique, le domaine de température 10 étant délimité par une valeur seuil supérieure T_{CMAX} et par une valeur seuil inférieure T_{CMIN}.

Entre 60% et 100% PN, la valeur maximale limite des intervalles de température consignes ΔTREF est constante et correspond à la température de consigne à 100% PN, soit T_{CMAX}.

Entre 35% et 60% PN, la valeur minimale limite des intervalles de température consignes ΔTREF est constante et correspond à la température de consigne à 25%, soit T_{CMIN}.

Le domaine de température consigne 10 ainsi illustré à titre d'exemple permet d'autoriser une variation maximale de la température du liquide primaire à une puissance thermique de 60% PN. Ainsi, tant que la température du liquide primaire se trouve à l'intérieur du domaine (à une bande morte Δ_{BM} près autour de l'intervalle de température consigne ΔTREF), les actions de régulation de la température ne sont pas engagées.

Ainsi, le domaine de température 10 illustré à la figure 3 permet de minimiser les actions, comme par exemple les déplacements des grappes de contrôle, lors du fonctionnement d'un réacteur nucléaire fonctionnant en suivi de charge et dont les variations de charges dues au réglage de fréquence (par exemple de ± 5%) sont réalisées le plus fréquemment autour de 60% de la puissance nominale.

La figure 4 représente un deuxième exemple de réalisation d'un domaine de température de consigne 20 réalisé sur le programme de température d'un réacteur nucléaire fonctionnant en suivie de charge. Ce deuxième domaine de température consigne est défini de manière à autoriser une variation maximale de la température du liquide primaire à 50% PN, valeur où l'on privilégie le réglage de fréquence. De façon similaire au premier exemple décrit précédemment, à 0% PN et à 100% PN, la température consigne est définie par une valeur consigne unique TREF_{MIN} (à 0% PN) et TREF_{MAX} (à 100% PN) de manière à minimiser les éventuels impacts sur les études d'accident et à prendre en compte la pression de vapeur demandée par la turbine. Les valeurs de température consignes TREF_{MIN} à 0% PN et TREF_{MAX} à 100% PN sont identiques aux valeurs de température consignes de l'état de la technique pour ces mêmes valeurs de puissance thermique, l'évolution de la température consigne TREF en fonction de la puissance thermique, selon l'état de la technique, étant représenté sur la figure 4 à titre de comparaison par une droite en pointillé référencée TREF.

Selon un autre mode de réalisation (non illustré), le domaine de température peut également présenter :
- une première partie, par exemple entre 0% et 35% de la puissance nominale, dans laquelle les intervalles de température présentent une amplitude variable qui augmente en fonction de la puissance,
- une deuxième partie, par exemple entre 35% et 70% de la puissance nominale, dans laquelle les intervalles de température présentent une amplitude maximale constante non nulle, et ;
- une troisième partie, par exemple entre 70% et 100% de la puissance nominale, dans laquelle les intervalles de température présentent une amplitude variable décroissante en fonction de la puissance.
Ce domaine de température ainsi décrit est particulièrement adapté pour des réacteurs nucléaires fonctionnant en suivi de charge avec différents paliers bas de charge (entre 35% et 70% PN) au niveau desquels est effectué un réglage de fréquence.

En parallèle de cette régulation pour maintenir la température de liquide primaire dans un intervalle de température consigne, les autres paramètres du coeur, à savoir la distribution axiale de puissance (axial offset) et la capacité de retour instantanée en puissance (Pₘₐₓ) sont toujours contrôlés en parallèle, en faisant varier les positions des groupes de grappes et la concentration en Bore du liquide primaire.

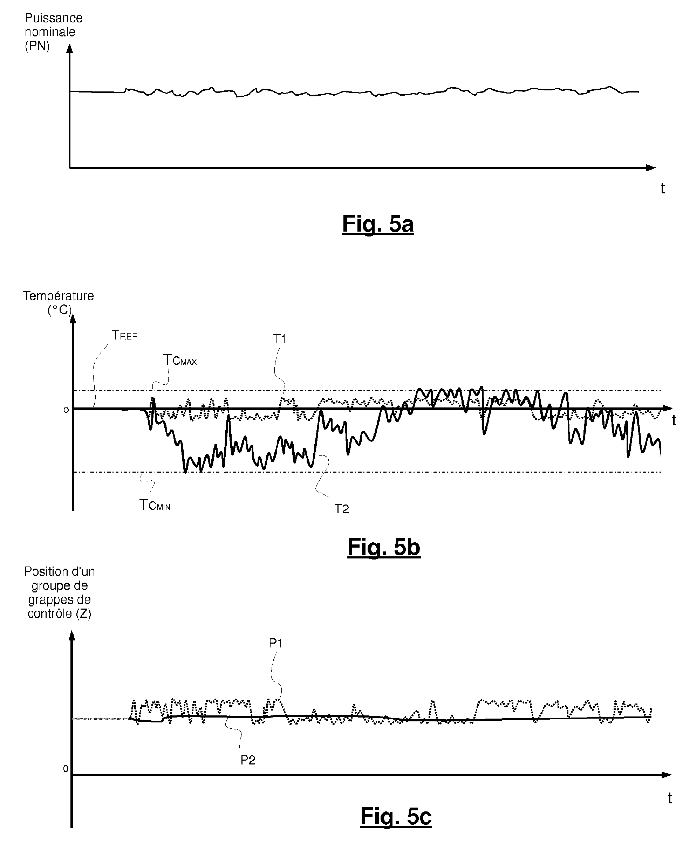

Les figures 5a, 5b et 5c illustrent les variations de la température du réacteur ainsi que la position d'un groupe de grappes de contrôle résultant de la mise en oeuvre du procédé de pilotage selon l'invention lors d'un fonctionnement en réglage de fréquence illustré particulièrement par le graphique de la figure 5a.

La figure 5b illustre plus particulièrement les variations libres de la température (courbe T2) dans l'intervalle de température consigne ΔTREF délimité par les valeurs seuils T_{CMAX} et T_{CMIN.}

A titre de comparaison, le graphique illustre également les variations de la température (courbe T1) résultant d'une régulation de la température par rapport à une température de référence TREF pour le même fonctionnement en réglage de fréquence.

La libre variation de la température du liquide primaire va donc permettre de compenser les variations de puissance. Ainsi, le procédé selon l'invention permet de s'affranchir de la compensation des variations de puissance par de très nombreux mouvements de grappes de contrôle de manière à maintenir la température du liquide primaire au plus proche de la température consigne de référence TREF.

A cet effet, la figure 5c illustre pour l'exemple de fonctionnement en réglage de fréquence illustré à la figure 5a, le gain des mouvements de grappes obtenu par la mise en oeuvre du procédé selon l'invention. En effet, la courbe P1 représente les mouvements de grappes nécessaires pour maintenir la température du liquide primaire au plus proche de la température consigne de référence TREF (mise en oeuvre d'un pilotage selon l'état de la technique), et la courbe P2 représente les mouvements de grappes nécessaires pour maintenir la température du liquide primaire dans l'intervalle de température consigne.

Ainsi, l'utilisation d'un domaine de température consigne pour réguler la température du réacteur nucléaire lors d'un fonctionnement en réglage de fréquences permet de réduire de façon significative, voire de s'affranchir, des mouvements de grappes de contrôle.

L'utilisation d'un domaine de température selon l'invention a également pour avantage de diminuer les volumes d'effluents lors du fonctionnement en suivi de charge du réacteur nucléaire.

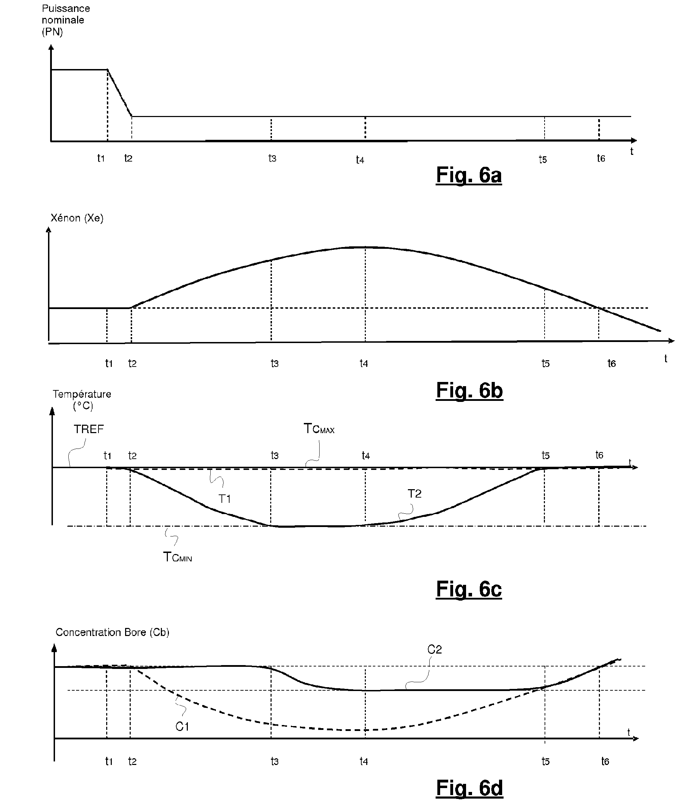

Ainsi, lors d'un fonctionnement en suivi de charge, tel qu'illustré à titre d'exemple par le graphique de la figure 6a, la libre variation de la température dans l'intervalle de consigne va permettre de reprendre les effets de la réactivité en prenant en compte l'effet Xénon (représenté par le graphique de la figure 6b) ce qui va permettre de diminuer le nombre de pas des mécanismes de commande des grappes de contrôle (non représenté) et de réduire les volumes d'effluents (représenté par la figure 6d).

La figure 6c représente, à cet effet, les variations de la température lors du suivi de charge représenté à la figure 6a et la figure 6d représente les variations de la concentration en bore lors de ce même suivi de charge.

Le graphique illustré à la figure 6c illustre plus particulièrement les variations libres de la température (courbe T2) dans l'intervalle de température consigne ΔTREF délimité par les valeurs seuils T_{CMAX} et T_{CMIN} résultant de la mise en oeuvre du procédé de pilotage selon l'invention. A titre de comparaison, le graphique illustre également les variations de la température (courbe T1) résultant d'une régulation de la température par rapport à une température de référence TREF résultant de la mise en oeuvre d'un procédé de pilotage selon l'état de la technique.

Le graphique illustré à la figure 6d illustre plus particulièrement les variations de la concentration en bore (courbe C2) lors du suivi de charge résultant de la mise en oeuvre du procédé de pilotage selon l'invention. A titre de comparaison, le graphique illustre également les variations de la concentration en bore (courbe C1) lors du même suivi de charge résultant de la mise en oeuvre d'un procédé de pilotage selon l'état de la technique.

Tel qu'illustré par la figure 6d, la libre variation de la température dans l'intervalle de température consigne permet de retarder le début de la dilution (courbe C2). Lorsque la température atteint une valeur seuil de l'intervalle de température consigne (T_{CMIN} à l'instant t3), une régulation doit intervenir pour maintenir la température dans l'intervalle de température consigne ΔTREF (de l'instant t3 à l'instant t4). Cette régulation est donc réalisée par une dilution à partir de t3. A L'instant t4, la température du réacteur revient à l'intérieur de l'intervalle de température consigne ΔTREF, la dilution est stoppée. A partir de l'instant t5, pour compenser la température qui atteint la valeur seuil T_{CMAX}, une borication est réalisée et elle est poursuivie à partir de t6 de manière à compenser la diminution du Xénon visible sur la courbe de la figure 6b.

Ainsi, la figure 6d illustre, à titre d'exemple, la réduction des volumes d'effluents engendrés lors d'un suivi de charge (courbe C2) par rapport aux volumes d'effluents engendrés par la mise en oeuvre d'un procédé de pilotage selon l'état de la technique (courbe C1).

L'invention a été particulièrement décrite en application avec le mode de pilotage T ; toutefois, l'invention est également applicable à tous les modes de pilotage connus de l'homme du métier et pas seulement aux modes de pilotage mentionnés dans la présente demande.

## Revendications

1. Procédé de pilotage d'un réacteur nucléaire à eau sous pression, ledit réacteur comportant :
- un coeur produisant une puissance thermique ;
- des moyens pour acquérir des grandeurs représentatives des conditions de fonctionnement du coeur, telles que la puissance thermique et/ou la température du liquide primaire de refroidissement ;
ledit procédé comportant une étape de régulation de la température du liquide primaire de refroidissement si la température de liquide primaire de refroidissement, pour une puissance thermique donnée, n'est pas comprise dans un intervalle de température consigne (ΔTREF) prédéfini en fonction de la puissance du réacteur, ledit intervalle de température consigne (ΔTREF) étant défini par :
- une amplitude variable (ΔT) sur une plage de puissance thermique comprise entre N% et 100% de la puissance nominale, N étant compris dans l'intervalle [0 ; 100[;
- une amplitude nulle à 100% de la puissance nominale ;
- une amplitude nulle à N% de la puissance nominale ; et
ladite régulation n'intervenant pas tant que la température du liquide primaire est à l'intérieur dudit intervalle de température (ΔTREF) pour une puissance thermique donnée.

2. Procédé de pilotage d'un réacteur nucléaire à eau sous pression selon la revendication précédente **caractérisé en ce que** ledit intervalle de température consigne (ΔTREF) est inscrit dans une zone (ZH) dont la limite inférieure correspond à la température consigne à 0% de la puissance nominale (TREF_{MIN}) et dont la limite supérieure correspond à la température consigne à 100% de la puissance nominale (TREF_{MAX}).

3. Procédé de pilotage d'un réacteur nucléaire à eau sous pression selon l'une des revendications précédentes **caractérisé en ce qu'**il comporte une étape de régulation d'au moins un autre des paramètres du coeur parmi : la distribution axiale de puissance (AO) et la capacité de retour instantané en puissance (Pmax) lorsque la température du liquide primaire est comprise dans l'intervalle de température consigne (ΔTREF).

4. Procédé de pilotage d'un réacteur nucléaire à eau sous pression selon l'une des revendications précédentes **caractérisé en ce que** ledit intervalle de température (ΔTREF) présente une amplitude variable (ΔT) au moins sur une plage de puissance thermique comprise entre 50% et 100% de la puissance nominale.

5. Procédé de pilotage d'un réacteur nucléaire à eau sous pression selon l'une des revendications précédentes **caractérisé en ce que** ladite amplitude maximale de température dudit intervalle est comprise entre 40% et 80% de la puissance nominale.

## Patentansprüche

1. Steuerverfahren eines Druckwasserreaktors, wobei der genannte Reaktor umfasst:
- einen eine thermische Leistung produzierenden Kern;
- Mittel zum Erwerb der Größen, die die Betriebsbedingungen des Kerns darstellen, wie z. B. die thermische Leistung und / oder die Temperatur der primären Kühlflüssigkeit;
wobei das genannte Verfahren einen Regulierungsschritt der Temperatur der primären Kühlflüssigkeit umfasst, wenn die Temperatur der primären Kühlflüssigkeit für eine bestimmte thermische Leistung nicht in einem Solltemperaturintervall (ΔTREF) inbegriffen ist, das in Abhängigkeit von der Leistung des Reaktors vordefiniert ist, wobei das genannte Solltemperaturintervall (ΔTREF) definiert ist durch:
- eine variable Amplitude (ΔT) auf einem thermischen Leistungsbereich, der zwischen N % und 100 % der nominalen Leistung inbegriffen ist, wobei N in dem Intervall [0; 100] inbegriffen ist;
- eine Amplitude von null bis 100 % der nominalen Leistung;
- eine Amplitude von null bis N % der nominalen Leistung;
und
wobei die genannte Regulierung nicht erfolgt, solange die Temperatur der primären Flüssigkeit sich für eine bestimmte thermische Leistung innerhalb des genannten Temperaturintervalls (ΔTREF) befindet.

2. Steuerverfahren eines Druckwasserreaktors gemäß dem voranstehenden Anspruch, **dadurch gekennzeichnet, dass** das genannte Solltemperaturintervall (ΔTREF) in einem Bereich (ZH) festgelegt ist, dessen untere Grenze der Solltemperatur bei 0 % der nominalen Leistung (TREF-_{MIN}) entspricht und dessen obere Grenze der Solltemperatur bei 100 % der nominalen Leistung (TREF_{MAX}) entspricht.

3. Steuerverfahren eines Druckwasserreaktors gemäß einem der voranstehenden Ansprüche, **dadurch gekennzeichnet, dass** es einen Regulierungsschritt wenigstens eines der Parameter des Kerns umfasst von: der axialen Leistungsverteilung (AO) und der Fähigkeit zur sofortigen Wiederherstellung der Leistung (Pmax), wenn die Temperatur der primären Flüssigkeit in dem Intervall der Solltemperatur (ΔTREF) inbegriffen ist.

4. Steuerverfahren eines Druckwasserreaktors gemäß einem der voranstehenden Ansprüche, **dadurch gekennzeichnet, dass** das genannte Temperaturintervall (ΔTREF) eine variable Amplitude (ΔT) wenigstens auf einem Bereich der thermischen Leistung aufweist, der zwischen 50 % und 100 % der nominalen Leistung inbegriffen ist.

5. Steuerverfahren eines Druckwasserreaktors gemäß einem der voranstehenden Ansprüche, **dadurch gekennzeichnet, dass** die genannte maximale Temperaturamplitude des genannten Intervalls zwischen 40 % und 80 % der nominalen Leistung inbegriffen ist.

## Claims

1. Method for controlling a pressurised water nuclear reactor, said reactor comprising:
- a core producing thermal power;
- means for acquiring quantities representative of the operating conditions of the core, such as the thermal power and/or the temperature of the primary coolant;
said method comprising a step of adjusting the temperature of the primary coolant if the temperature of the primary coolant, for a given thermal power, is not within a temperature setpoint interval (ΔTREF) defined beforehand depending on the power of the reactor, said temperature setpoint interval (ΔTREF) being defined by:
- a variable amplitude (ΔT) over a thermal power range between N% and 100% of the nominal power, N lying between [0; 100];
- a zero amplitude at 100% of the nominal power;
- a zero amplitude at N% of the nominal power;
and
said adjustment not being carried out provided the temperature of the primary liquid is within said temperature interval (ΔTREF) for a given thermal power.

2. Method for controlling a pressurised water nuclear reactor as claimed in the preceding claim **characterised in that** said temperature setpoint interval (ΔTREF) is within a zone (ZH) of which the lower limit corresponds to the temperature setpoint at 0% of the nominal power (TREF_{MIN}) and of which the upper limit corresponds to the temperature setpoint at 100% of the nominal power (TREF_{MAX}).

3. Method for controlling a pressurised water nuclear reactor according to one of the preceding claims **characterised in that** it comprises a step of adjusting at least one other of the parameters of the core among: the axial distribution of power (AO) and the instant power return capacity (Pmax) when the temperature of the primary coolant is within the temperature setpoint interval (ΔTREF).

4. Method for controlling a pressurised water nuclear reactor according to one of the preceding claims **characterised in that** said temperature interval (ΔTREF) has a variable amplitude (ΔT) at least over a range of thermal power between 50% and 100% of the nominal power.

5. Method for controlling a pressurised water nuclear reactor according to one of the preceding claims **characterised in that** said maximum temperature amplitude of said interval is between 40% and 80% of the nominal power.
